(19) Europäisches Patentamt

European Patent Office

Office européen des brevets

(11) **EP 0 902 417 B1**

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(51) Int Cl.$^7$: **G10L 15/08**

(21) Anmeldenummer: **98115323.2**

(22) Anmeldetag: **13.08.1998**

(54) **Verfahren und Einrichtung zur Spracherkennung von verwirrenden Wörtern**

Method and device for speech recognition of confusable words

Procédé et dispositif de reconnaissance vocale de mots portant à confusion

(84) Benannte Vertragsstaaten:
**AT BE CH DE FR GB IT LI NL**

(30) Priorität: **12.09.1997 DE 19740175**

(43) Veröffentlichungstag der Anmeldung:
**17.03.1999 Patentblatt 1999/11**

(60) Teilanmeldung:
**03003961.4 / 1 327 975**

(73) Patentinhaber: **SIEMENS AKTIENGESELLSCHAFT**
**80333 München (DE)**

(72) Erfinder:
• **Lucioni, Gonzalo Dr. Ing.**
  **58454 Witten (DE)**
• **Gzara, Samir Dipl.-Ing.**
  **44369 Dortmund (DE)**

(56) Entgegenhaltungen:
**EP-A- 0 763 816     DE-A- 4 131 387**
**US-A- 5 579 436**

## Beschreibung

Die Erfindung betrifft ein Verfahren zur Verarbeitung eines Sprachsignals, bei dem für mindestens zwei Referenzworte mit einem oder mehreren ähnlichen Wortbestandteilen ein erstes Wortmodell und ein zweites Wortmodell mit aufeinanderfolgenden Zuständen für die Wortbestandteile festgelegt werden, vorzugsweise sogenannte "Hidden-Markov"-Modelle. Zu jedem Zustand gehört mindestens ein Referenzvektor, dessen Komponenten die Ausprägung von Merkmalen in einem zum jeweiligen Zustand gehörenden Referenzsignal angeben. Im ersten Wortmodell ist ein erster Zustand für den ähnlichen Wortbestandteil im ersten Referenzwort und im zweiten Wortmodell ist ein zweiter Zustand für den ähnlichen Wortbestandteil im zweiten Referenzwort festgelegt.

Beispielsweise ist aus der europäischen Offenlegungsschrift EP 0 763 816 A2 ein Verfahren zur Erkennung von Sprachsignalen bekannt. Hierbei wird das unbekannte Sprachsignal in einem ersten Schritt einem Erkennungsprozessor zugeführt, der unter Zugriff auf eine Erkennungs-Datenbasis ein hypothetisches Sprachsignal erzeugt. Dieses hypothetische Sprachsignal wird in einem nächsten Schritt einem Verifikationsprozessor zugeführt, der unter Zugriff auf eine Verifikations-Datenbasis ein Meßsignal generiert, welches die Wahrscheinlichkeit angibt, dass das hypothetische Sprachsignal dem unbekannten Sprachsignal entspricht. Liegt das Meßsignal über einem Verifikations-Schwellwert, wird das Sprachsignal als erkannt klassifiziert.

Beim vorliegenden Anmeldungsgegenstand wird ein beim Sprechen eines Wortes erzeugtes Sprachsignal in aufeinanderfolgende Signalabschnitte unterteilt, und für jeden Signalabschnitt wird ein Vergleichsvektor erzeugt, dessen Komponenten die Ausprägung der Merkmale im jeweiligen Signalabschnitt angeben. Die Vergleichsvektoren werden in der zeitlichen Reihenfolge ihrer Signalabschnitte nacheinander bearbeitet, wobei für vorbestimmte Zustände aus dem zugehörigen Referenzvektor und aus dem aktuellen Vergleichsvektor ein aktuelles lokales Abweichungsmaß berechnet wird, dessen Wert mit zunehmender Abweichung des Vergleichsvektors vom Referenzvektor zunimmt. Außerdem wird für jeden Zustand ein aktuelles Hilfsabweichungsmaß berechnet. Das zuletzt erzeugte Hilfsabweichungsmaß des letzten Zustands eines Wortmodells gibt als Wortabweichungsmaß die Abweichung des gesprochenen Wortes zum durch das jeweilige Wortmodell modellierte Referenzwort an. Nach dem vollständigen Bearbeiten des Sprachsignals wird als das gesprochene Wort dasjenige Referenzwort erkannt, welches das kleinste Wortabweichungsmaß hat.

Ein derartiges Verfahren mit "Hidden-Markov"-Modellen ist z.B. in dem folgenden Buch erläutert: "Automatische Spracherkennung - Methoden der Klassifikation und Merkmalsextraktion", G. Ruske, 2. Aufl., R. Oldenbourg, München 1994, Seiten 178 bis 182. Ein Nachteil des bekannten Verfahrens besteht darin, daß bei akustisch ähnlichen Wörtern oft Verwechslungen auftreten.

Des weiteren ist aus der deutschen Offenlegungsschrift DE 41 31 387 A1 ein Verfahren zur Erkennung von Mustern in zeitvarianten Meßsignalen bekannt, welches eine verbesserte Unterscheidung zwischen phonetisch ähnlichen Wörtern (z.B. "zwei" und "drei") durch eine paarweise Nachklassifikation ermöglicht. Hierbei wird der Viterbi-Dekodierungs-Algorithmus mit der Methode der Hidden-Markov-Modelle kombiniert, wobei die unterscheidungsrelevanten Merkmale in einem zweiten Schritt nach der Hauptklassifikation getrennt untersucht werden. Hierbei werden unterschiedliche Komponenten von Merkmalsvektoren unterschiedlich gewichtet.

Es ist Aufgabe der Erfindung ein alternatives Verfahren zur Verarbeitung eines Sprachsignals anzugeben, bei dem auch akustisch ähnliche Worte ohne Verwechslung erkannt werden.

Diese Aufgabe wird durch eine Verfahren mit den Merkmalen des Patentanspruchs 1 gelöst. Vorteilhafte Weiterbildungen dieses Verfahrens sind in den auf den Anspruch 1 rückbezogenen Unteransprüchen angegeben.

Die Erfindung geht von der Überlegung aus, daß bei dem Ansatz zur Sprachverarbeitung mit "Hidden-Markov"-Modellen die Referenzvektoren zwar auf der Basis vieler Äußerungen von verschiedenen Sprechern ermittelt werden, Querverbindungen eines Wortmodells mit den anderen Wortmodellen des Wortschatzes jedoch nicht berücksichtigt werden. Als Beispiel seien die Wörter "drei" und "Brei" genannt. Diese beiden Wörter unterscheiden sich nur im ersten Teil, d.h. durch das "d" und "B". In einem Erkennungsvorgang würde aber hauptsächlich der Wortteil "rei", wegen seiner langen Sprechdauer zur Berechnung des zur Unterscheidung benutzten Wortabweichungsmaßes beitragen. Der Teil "rei" kann jedoch zur Unterscheidung zwischen "drei" und "Brei" nichts beitragen. Durch eine getrennte Modellierung in einem Wortmodell für ein Referenzwort "drei" und einem Wortmodell für das Referenzwort "Brei" würde für jedes Wortmodell eine andere Darstellung für das "rei" entstehen. Nimmt man an, daß die Äußerung "drei" erkannt werden soll, das "rei" davon aber besser zu dem des Referenzwortes von "Brei" paßt, so würden im Wortbestandteil "rei" des Wortmodells "Brei" kleinere Abweichungsmaße bzw. höhere Ähnlichkeitsmaße ermittelt werden, als im Wortbestandteil "rei" des Wortmodells "drei". Unterscheiden sich die Abweichungsmaße für den ersten Buchstaben "d" bzw. "B" in den Wortmodellen für "drei" und "Brei" nur wenig, so kommt es zu einer Verwechslung bei der Spracherkennung.

Deshalb wird beim Verfahren nach der Erfindung bei der Bearbeitung mindestens eines ausgewählten Vergleichsvektors zum Berechnen des aktuellen Hilfsabweichungsmaßes des ersten Zustands das aktuelle lokale Abweichungsmaß des zweiten Zustands einbezogen bzw. berücksichtigt. Für das eben genannte Beispiel mit den Wörtern "drei" und "Brei" bedeutet dies, daß vorzugsweise bei der Berechnung sämtlicher Hilfsabweichungsmaße für den Zustand "r" im Wortmodell für das Referenzwort "drei" die lokalen Abweichungsmaße für den Zustand "r" im Wortmodell "Brei" berücksichtigt werden. Durch diese Maßnahme wird erreicht, daß der Beitrag der ähnlichen Wortbestandteile zur Unterscheidung der zugehörigen ähnlichen Referenzworte abgestimmt werden kann. Jedoch leisten die ähnlichen Wortbestandteile weiterhin einen im wesentlichen unveränderten Beitrag zur Unterscheidung der Referenzworte mit ähnlichen Wortbestandteilen von den anderen Referenzworten des Wortschatzes. Durch das Berücksichtigen der anderen ähnlichen Wortmodelle entstehen Querverbindungen zwischen den ähnlichen Wortmodellen des Wortschatzes. Das Berücksichtigen dieser Querverbindungen führt letztlich zu weniger Verwechslungen bei der Sprachverarbeitung.

In einer Weiterbildung des Verfahrens nach der Erfindung wird bei der Bearbeitung des ausgewählten Vergleichsvektors vor der Berechnung des aktuellen Hilfsabweichungsmaßes für den ersten Zustand das aktuelle lokale Abweichungsmaß für diesen Zustand berechnet und mit dem aktuellen lokalen Abweichungsmaß für den zweiten Zustand verglichen. Abhängig vom Vergleichsergebnis wird dann das Abweichungsmaß des ersten oder zweiten Zustands zur Berechnung des Hilfsabweichungsmaßes des ersten Zustands verwendet. Durch diese Maßnahme werden erst einmal die lokalen Abweichungsmaße in beiden Wortmodellen nach einem einheitlichen Verfahren berechnet. Anschließend wird abhängig vom Vergleichsergebnis nur eines der beiden lokalen Abweichungsmaße verwendet, wodurch der oben erwähnte Abgleich stattfindet. Vorzugsweise wird das Abweichungsmaß mit dem kleineren Wert ausgewählt, damit die offensichtlich für den betrachteten Zustand des einen Wortmodells vorhandene große Ähnlichkeit mit dem Vergleichsvektor beide ähnliche Referenzworte gegenüber den anderen Referenzworten des Wortschatzes hervorhebt bzw. bevorzugt.

In einer anderen Weiterbildung des Verfahrens nach der Erfindung wird auch beim Berechnen des Hilfsabweichungsmaßes zu dem ähnlichen Zustand im zweiten Wortmodell auf das lokale Abweichungsmaß des ähnlichen Zustands im ersten Wortmodell Rücksicht genommen. Somit bestehen zwei wechselseitige Querverbindungen. Durch diese Maßnahme können bei der Unterscheidung des gesprochenen Wortes die beiden Wortmodelle gegenseitig aufeinander einwirken. Haben die beiden Referenzworte jeweils zwei aufeinanderfolgende ähnliche Wortbestandteile und ist z.B. gemäß erstem Wortmodell dessen erster ähnlicher Referenzwortbestandteil dem ersten gesprochenen ähnlichen Wortbestandteil sehr ähnlich und ist weiterhin gemäß zweitem Wortmodell dessen zweiter ähnlicher Referenzwortbestandteil dem zweiten gesprochenen ähnlichen Wortbestandteil sehr ähnlich, so ist die Wahrscheinlichkeit sehr groß, daß eines der beiden durch die ähnlichen Wortmodelle modellierten Referenzworte mit dem gesprochenen Wort übereinstimmt. Diese Tatsache wird dadurch berücksichtigt, daß bei der Modellierung des ersten ähnlichen Wortbestandteils in beiden Wortmodellen auf das erste Wortmodell Bezug genommen wird und bei der Modellierung des zweiten ähnlichen Wortbestandteils in beiden Wortmodellen auf das zweite Wortmodell Bezug genommen wird.

In einer alternativen Weiterbildung des Verfahrens nach der Erfindung wird bei der Berechnung des Hilfsabweichungsmaßes des zweiten Zustands anstelle des lokalen Abweichungsmaßes dieses Zustands das lokale Abweichungsmaß des ersten Zustands verwendet. Durch diese Maßnahme verringert sich trotz Berücksichtigung von Querverbindungen zwischen den Wortmodellen der Rechenaufwand gegenüber dem bekannten Verfahren, da die Berechnung des lokalen Abweichungsmaßes des zweiten Zustands entfällt. Die Verringerung des Rechenaufwands ist insbesondere bei Ähnlichkeitsvektoren und Vergleichsvektoren erheblich, die eine Vielzahl von Komponenten haben.

Dem Verwenden von Abweichungsmaßen ist das Verwenden von Ähnlichkeitsmaßen gleichgestellt. Beim Verwenden von Ähnlichkeitsmaßen wird das Wortmodell ermittelt, das die größte Ähnlichkeit zum gesprochenen Wort hat. Beim Berechnen von Hilfsähnlichkeitsmaßen werden zu verwendende alte Hilfsähnlichkeitsmaße so ausgewählt, daß ein möglichst großes neues Hilfsähnlichkeitsmaß entsteht.

Durch das Berücksichtigen der Querverbindung zwischen ähnlichen Wortmodellen mit ähnlichen Wortbestandteilen werden im Durchschnitt 35 % weniger Verwechslungen bei ähnlichen Worten gemeldet, so daß sich die Erkennungsrate auch insgesamt erhöht. Ähnliche Wortbestandteile sind dabei Wortbestandteile, die z.B. die gleiche Buchstabenabfolge haben. Außerdem gehören zu den ähnlichen Wortbestandteilen Wortbestandteile in verschiedenen Worten, die gleich oder ähnlich ausgesprochen werden.

Die Erfindung betrifft außerdem gemäß Anspruch 10 eine Sprachverarbeitungseinheit, die insbesondere zum Durchführen des oben erläuterten Verfahrens verwendet wird. Die oben genannten technischen Wirkungen gelten somit auch für die Sprachverarbeitungseinheit.

Im folgenden werden Ausführungsbeispiele der Erfindung an Hand der beiliegenden Zeichnungen erläutert. Darin zeigen:

Figur 1    die Berechnung von Hilfsabweichungsmaßen für zwei Wortmodelle der Referenzworte "drei" und "Brei",

Figur 2    eine weitere Art der Berechnung der Hilfsabweichungsmaße für die Wortmodelle der Referenzworte "drei" und "Brei",

Figur 3    ein sogenanntes Trellis-Diagramm für das Wortmodell des Referenzwortes "drei", und

Figur 4    die Berechnung von Hilfsabweichungsmaßen für das Wortmodell des Referenzwortes "drei" unter Berücksichtigung der Sprechdauer für Wortbestandteile.

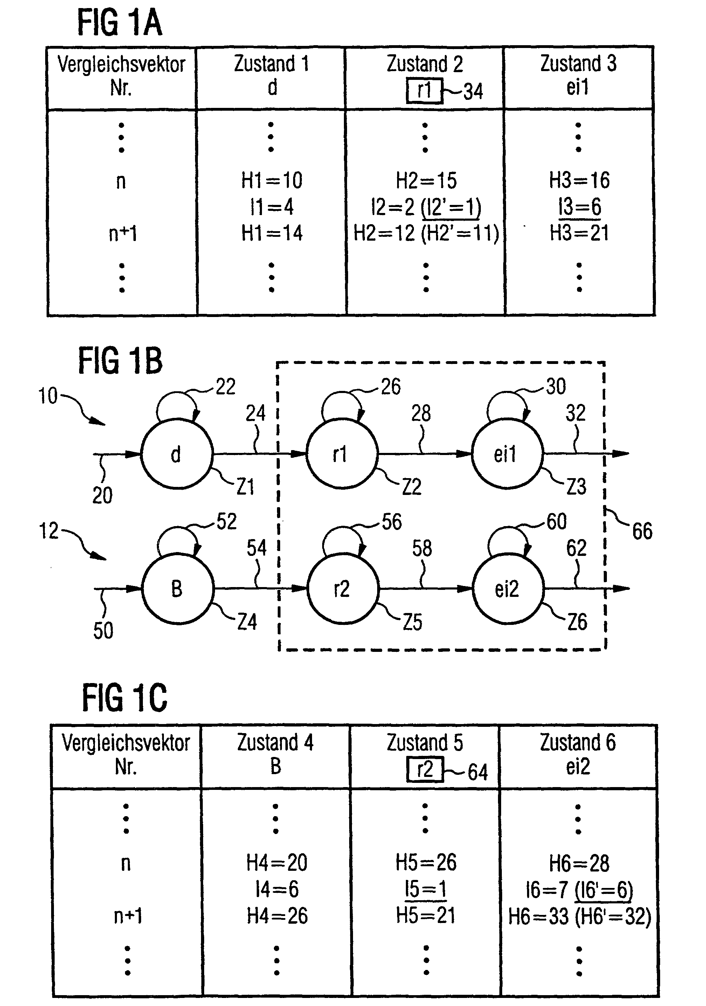

Figur 1 zeigt in Teilen a und c die Berechnung von Hilfsabweichungsmaßen für in einem Teil b gezeigte Wortmodelle 10 und 12. Das Wortmodell 10 ist ein sogenanntes "Hidden-Markov"-Modell zur Modellierung eines Referenzwortes "drei". Auch das Wortmodell 12 ist ein "Hidden-Markov"-Modell, jedoch zur Modellierung eines Referenzwortes "Brei".

Das Wortmodell 10 für das Referenzwort "drei" hat drei Zustände Z1, Z2 und Z3. Dem Zustand Z1 ist aus Gründen der Vereinfachung nur ein Referenzvektor d zugeordnet, dessen Komponenten die wahrscheinliche Ausprägung vorgegebener Merkmale bei der Aussprache des Buchstabens "d" im Wort "drei" angeben. Zu den Merkmalen gehören z.B. die Ausprägungen von Frequenzen innerhalb vorgegebener Frequenzbereiche in einem aufgenommenen Sprachsignal. So könnte der Referenzvektor d aus einem Spannungsverlauf erzeugt worden sein, der beim Aussprechen des Buchstabens "d" am Beginn des Wortes "drei" erzeugt wird, dargestellt durch einen Übergangspfeil 20. Der Referenzvektor d ist nur auf eine Sprechzeit von 10 ms bezogen, so daß der Zustand Z1 mehrmals hintereinander auftritt, sobald mit der Aussprache des Wortes "drei" begonnen wird, vgl. Übergangspfeil 22. Ein Übergangspfeil 24 zeigt den Übergang vom Zustand Z1 zum Zustand Z2 an, wenn nach der Aussprache des Wortbestandteils "d" die Aussprache des Wortbestandteils "r" folgt. Somit gehört der Zustand 2 zum Wortbestandteil "r". Ein Referenzvektor r1, der mit hoher Wahrscheinlichkeit die Ausprägung der betrachteten Merkmale beim Aussprechen des Wortbestandteils "r" im Wort "drei" angibt, ist dem Zustand Z2 zugeordnet.

Wann der Übergang vom Zustand Z1 zum Zustand Z2 erfolgt, hängt zum einen vom Sprecher und zum anderen auch von der momentanen Aussprache des Sprechers ab. Somit können nur Wahrscheinlichkeiten für den Übergang vom Zustand Z1 zum Zustand Z2 angegeben werden. Diese Wahrscheinlichkeiten werden experimentell ermittelt. Im Ausführungsbeispiel wird angenommen, daß die Wahrscheinlichkeiten für die durch die Übergangspfeile 20 bis 24 und die im folgenden erläuterten Übergangspfeile des Wortmodells 10 den gleichen Wert haben.

Dem Zustand Z2 kann wiederum der Zustand Z2 selbst folgen, vgl. Übergangspfeil 26. Alternativ kann jedoch auch nach dem Zustand Z2 der Zustand Z3 folgen, wie es durch einen Übergangspfeil 28 angedeutet ist. Der Zustand Z3 enthält einen Referenzvektor ei1, der dem Wortbestandteil "ei" im Wort "drei" zugeordnet ist. Nach dem Zustand Z3 folgt entweder wiederum der Zustand Z3, vgl. Übergangspfeil 30, oder die Aussprache des Wortes "drei" wird beendet. In letzterem Fall wird der Zustand Z3 verlassen, vgl. Übergangspfeil 32.

Mit dem Wortmodell 10 kann eine Referenzvektorfolge erzeugt werden, indem die Zustände Z1 bis Z3 entlang der Übergangspfeile 20 bis 32 z.B. von einem Programm durchlaufen werden. Die beim Durchlaufen der Zustände Z1 bis Z3 generierten Referenzvektoren werden dann mit einer Folge von Vergleichsvektoren verglichen, die aus dem zu verarbeitenden Sprachsignal erzeugt worden sind. Durch Vergleich der Folge von Referenzvektoren mit der Folge von Vergleichsvektoren kann ein Abweichungsmaß für das Wort "drei" berechnet werden, das die Abweichung des gesprochenen Wortes vom Referenzwort "drei" des Wortmodells 10 angibt. Die Anzahl der aus dem Wortmodell 10 erzeugbaren Folgen von Referenzvektoren ist jedoch sehr groß. Zur Verringerung des Rechenaufwandes ist es bekannt, z.B. den sogenannten Viterbi-Algorithmus einzusetzen, um die Referenzvektorfolge aus dem Wortmodell 10 zu bestimmen, welche die kleinste Abweichung zur Folge der Vergleichsvektoren hat.

Im oberen Teil a der Figur 1 ist eine Tabelle gezeigt, mit der die Bearbeitung eines Vergleichsvektors n beim Durchführen einer einfachen Variante des Viterbi-Algorithmus erläutert werden soll. Der aktuell bearbeitete Vergleichsvektor n, n+1 ist in der linken Spalte der Tabelle eingetragen. Die zweite Spalte der Tabelle bezieht sich auf den Zustand Z1 mit dem Referenzvektor d. Die dritte Spalte betrifft Werte, die für den Zustand Z2, d.h. mit Hilfe des Referenzvektors r1, berechnet werden. Die rechte Spalte der Tabelle betrifft den Zustand Z3, d.h. den Referenzvektor ei1. Beim Bearbeiten des Vergleichsvektors n werden die in der entsprechenden Zeile dargestellten alten Hilfsabweichungsmaße H1 bis H3 für die Zustände Z1 bis Z3 verwendet. Die Berechnung neuer bzw. aktueller Hilfsabweichungsmaße H1 bis H3 für die Bearbeitung des Vergleichsvektors n+1 wird im folgenden erläutert.

Dazu sei angenommen, daß zu Beginn der Bearbeitung des Vergleichsvektors n die alten Hilfsabweichungsmaße H1 bis H3 für die Zustände Z1 bis Z3 bekannt sind. Der Wertebereich der Hilfsabweichungsmaße liegt etwa zwischen 0 am Anfang und 100 am Ende der Berechnung. Der Zustand Z1 hat das Hilfsabweichungsmaß H1=10. Der Zustand Z2 hat das Hilfsabweichungsmaß H2=15. Und der Zustand Z3 hat ein Hilfsabweichungsmaß H3=16. Weiterhin sei angenommen, daß der Vergleichsvektor n aus einem Sprachsignalabschnitt erzeugt worden ist, der bei der Aussprache des Wortbestandteils "r" im Wort "drei" entstanden ist, vgl. Hervorhebung 34.

Aus dem Vergleichsvektor n und dem Referenzvektor d wird ein aktuelles lokales Abweichungsmaß l1 für den Zustand Z1 ermittelt, das im Ausführungsbeispiel den numerischen Wert "4" hat. Das lokale Abweichungsmaß l1 ist z.B. der geometrische Abstand des Vergleichsvektors n vom Referenzvektor d. Ein genaueres lokales Abweichungsmaß l1 ergibt sich, wenn außerdem eine Wahrscheinlichkeitsfunktion berücksichtigt wird.

Auf gleiche Art und Weise wird aus dem Vergleichsvektor n und dem Referenzvektor r1 ein aktuelles lokales Abweichungsmaß l2=2 ermittelt. Die Abweichung des Vergleichsvektors n vom Referenzvektor d ist, wie bei der Aussprache des Wortbestandteils "r" erwartet, größer als die Abweichung des Vergleichsvektors n vom Referenzvektor r1. Ein aktuelles lokales Abweichungsmaß 13 für den Zustand Z3, d.h. für den Referenzvektor ei1 hat im Ausführungsbeispiel den numerischen Wert "6".

Die neuen Hilfsabweichungsmaße H1 bis H3 für die Bearbeitung des nächsten Vergleichsvektors n+1 werden unter Berücksichtigung des Wortmodells 10 ermittelt. Wie im Wortmodell 10 angegeben, kann der Zustand Z1 nur über den Übergangspfeil 20 oder den Übergangspfeil 22 erreicht werden. Der Einfluß des Übergangspfeils 20 wird nur in einer Startphase des Viterbi-Algorithmus für den ersten Vergleichsvektor beachtet. Für den Vergleichsvektor n, der zu einem Signalabschnitt gehört, der etwa in der Mitte des gesamten bei der Aussprache des Wortes "drei" erzeugten Signalverlaufs liegt, muß nur der Übergangspfeil 22 berücksichtigt werden. Als vorhergehender Zustand für den Zustand Z1 kommt somit nur der Zustand Z1 selbst in Frage. Die Berechnung des neuen Hilfsabweichungsmaßes H1 für die Bearbeitung des Vergleichsvektors n+1 erfolgt deshalb durch eine einfache Addition des aktuellen lokalen Abweichungsmaßes I1 für den Zustand Z1 zum alten Hilfsabweichungsmaß H1 für diesen Zustand. Es ergibt sich ein neues Hilfsabweichungsmaß H1=14.

Der Übergang zum Zustand Z2 kann ausgehend vom Zustand Z1 über den Übergangspfeil 24 oder ausgehend vom Zustand Z2 über den Übergangspfeil 26 erfolgen, der einen Selbstübergang angibt. Beim Berechnen des neuen Hilfsabweichungsmaßes H2 für den Zustand Z2 erfolgt deshalb ein Vergleich des alten Hilfsabweichungsmaßes H1 für den Zustand Z1 und des alten Hilfsabweichungsmaßes H2 für den Zustand Z2. Es wird festgestellt, daß der Zustand Z1 das kleinere Hilfsabweichungsmaß H1=10 hat. Zu diesem Hilfsabweichungsmaß H1 wird der Wert des lokalen Abweichungsmaßes 12 für den Zustand Z2 addiert. Das neue Hilfsabweichungsmaß H2 für den Zustand Z2 hat den numerischen Wert "12". Auf ähnliche Art ergibt sich für den Zustand Z3 aus dem Wortmodell 10, daß als vorhergehende Zustände nur der Zustand Z2 und der Zustand Z3 selbst in Frage kommen. Der Vergleich der alten Hilfsabweichungsmaße H2 und H3 für diese Zustände Z2 bzw. Z3 ergibt, daß das Hilfsabweichungsmaß H2=15 für den Zustand Z2 kleiner ist. Das aktuelle lokale Abweichungsmaß I3=6 des Zustands Z3 wird deshalb zum Wert des Hilfsabweichungsmaßes H2=15 für den Zustand Z2 addiert, um das neue Hilfsabweichungsmaß H3=21 für den Zustand Z3 zu erhalten.

Auf analoge Weise werden die auf den Vergleichsvektor n folgenden Vergleichsvektoren n+1 usw. bearbeitet, bis alle Vergleichsvektoren des ausgesprochenen Wortes bearbeitet worden sind. Das Hilfsabweichungsmaß H3 des Zustands Z3 für den letzten Vergleichsvektor gibt die Abweichung des gesprochenen Wortes vom mit dem Wortmodell 10 modellierten Referenzwort "drei" an und wird deshalb als Wortabweichungsmaß W10 bezeichnet.

Gibt es wie im Ausführungsbeispiel mehrere Referenzworte des Wortschatzes und damit noch andere Wortmodelle, so werden auch für die anderen Referenzworte Wortabweichungsmaße W berechnet, um dann das Wortabweichungsmaß W zu bestimmen, welches den kleinsten Wert hat.

Das im Teil b der Figur 1 gezeigte Wortmodell 12 hat drei Zustände Z4, Z5 und Z6, zu denen in dieser Reihenfolge Referenzvektoren B, r2 und ei2 gehören. Die Komponenten des Referenzvektors B enthalten die Ausprägung der vorgegebenen Merkmale, bei der Aussprache des Wortbestandteils "B" während der Aussprache des Wortes "Brei". Die Komponenten des Referenzvektors r2 enthalten die Ausprägung der gleichen Merkmalen bei der Aussprache des Wortbestandteils "r" des Wortes "Brei". Ebenso enthalten die Komponenten des Merkmalsvektors ei2 die Ausprägung der Merkmale bei der Aussprache des Wortbestandteils "ei" des Wortes "Brei". Der Referenzvektor r1 des Wortmodells 10 und der Referenzvektor r2 des Wortmodells 12 werden sich in der Regel etwas voneinander unterscheiden, da der Wortbestandteil "r" in den Worten "drei" und "Brei" etwas anders ausgesprochen wird. Auch unterscheiden sich die Referenzvektoren ei1 und ei2 voneinander.

Der Zustand Z4 wird über einen Übergangspfeil 50 erreicht, wenn mit der Modellierung begonnen wird. Ein Übergangspfeil 52 gibt einen Selbstübergang vom Zustand Z4 zu sich selbst an, d.h. wieder zum Zustand Z4. Ein Übergangspfeil 54 gibt den Übergang vom Zustand Z4 zum Zustand Z5 an. Der Selbstübergang vom Zustand Z5 zu sich selbst wird durch einen Übergangspfeil 56 dargestellt. Den Übergang vom Zustand Z5 zum Zustand Z6 verdeutlicht ein Übergangspfeil 58. Der Selbstübergang vom Zustand Z6 zum Zustand Z6 ist durch einen Übergangspfeil 60 dargestellt. Die Modellierung ist beendet, wenn der Zustand Z6 verlassen wird, vgl. Übergangspfeil 62.

Die Berechnung der Hilfsabweichungsmaße H4 bis H5 erfolgt nach dem bereits an Hand des Wortmodells 10 erläuterten Schema. Dabei ergeben sich jedoch andere Zahlenwerte. Eine Tabelle im unteren Teil c der Figur 1 zeigt Werte, die bei der Bearbeitung des Vergleichsvektors n mit Hilfe des Wortmodells 12 verwendet bzw. berechnet werden. Die linke Spalte der Tabelle in Teil c der Figur 1 zeigt wiederum den aktuell bearbeiteten Vergleichsvektors n, n+1 usw. Die zweite Spalte zeigt die aktuellen Hilfsabweichungswerte H4 und die lokalen Abweichungswerte 14 für den Zustand Z4, d.h. für den Referenzvektor B. Die dritte Spalte der Tabelle in Teil c der Figur 1 zeigt die Hilfsabweichungsmaße H5 und die lokalen Abweichungsmaße 15 für den Zustand Z5 bzw. für den Referenzvektor r2. Schließlich zeigt die vierte Spalte der Tabelle in Teil c der Figur 1 die Hilfsabweichungsmaße H6 und die lokalen Abweichungsmaße 16 für den Zustand Z6, d.h. für den Referenzvektor ei2.

Es sei wiederum angenommen, daß der Vergleichsvektor n bei der Aussprache des Wortbestandteils "r" im Wort "drei" entstanden ist, vgl. Hervorhebung 64. Die alten Hilfsabweichungsmaße H4 bis H6 für die Zustände Z4, Z5 und Z6 zu Beginn der Bearbeitung des Vergleichsvektors n sind sämtlich größer als die entsprechenden alten Hilfsabweichungsmaße H1 bis H3 in der oberen Tabelle. Dies ist darauf zurückzuführen, daß die Vergleichsvektoren, die bei der Aussprache des Buchstabens "d" im Wort "drei" erzeugt worden sind, zu größeren Abweichungen im Wortmodell 12 führen. Zu Beginn der Bearbeitung des Vergleichsvektors n gilt für die Hilfsabweichungsmaße H4=20, H5=26 und H6=28. Für den Vergleichsvektor n werden lokale Abweichungsmaße I4=6, I5=1 und I6=7 für die Abweichung vom Referenzvektor B, r2 bzw. ei2 berechnet.

Die Berechnung der neuen Hilfsabweichungsmaße H4 bis H6 für die Bearbeitung des nächsten Vergleichsvektors n+1 erfolgt mit Hilfe des Wortmodells 12. Das Wortmodell 12 hat die gleiche Struktur wie das Wortmodell 10. Somit erfolgt auch das Berechnen der neuen Hilfsabweichungswerte H4 bis H6 auf die an Hand der oberen Tabelle der Figur 1 bereits erläuterten Art und Weise. Für den Zustand Z4 ergibt sich durch Addition von H4=20 und I4=6 das neue Hilfsabweichungsmaß H4=26. Für den Zustand Z5 ergibt sich das neue Hilfsabweichungsmaß H5=21 durch Addition von H4=20 und I5=1. Das neue Hilfsabweichungsmaß H6=33 für den Zustand Z6 ergibt sich nach einem Vergleich des Hilfsabweichungsmaßes H5=26 für den Zustand Z5 und des Hilfsabweichungsmaßes H6=28 für den Zustand Z6 durch Addition von H5 und I6. Das Hilfsabweichungsmaß H6 des Zustands Z6 für den letzten Vergleichsvektor gibt die Abweichung des gesprochenen Wortes vom mit dem Wortmodell 12 modellierten Referenzwort "Brei" an und wird deshalb als Wortabweichungsmaß 12 bezeichnet.

Die Wortmodelle 10 und 12 modellieren die Referenzworte "drei" bzw. "Brei" mit ähnlichen Wortbestandteilen, nämlich "rei", und haben somit auch ähnliche Wortmodellteile, vgl. Strichlinie 66. Die bisher erläuterte Berechnung der Hilfsabweichungsmaße H1 bis H6 entspricht dem Verfahren, wie es beim Stand der Technik angewendet wird. Um zu gewährleisten, daß bei ähnlichen Wortmodellen, wie z.B. bei den Wortmodellen 10 und 12, nur der sich unterscheidende Teil des jeweiligen Wortmodells zur Auswahl des mit dem einen oder mit dem anderen Wortmodell modellierten Referenzwortes beiträgt, wird die Berechnung der Hilfsabweichungsmaße H2, H3, H5 und H6 wie folgt verändert.

Bei der Berechnung des neuen Hilfsabweichungsmaßes H2 des Zustands Z2 für die Bearbeitung des Vergleichsvektors n+1 wird festgestellt, daß das aktuelle lokale Abweichungsmaß I5=1 für den Zustand Z5 im anderen Wortmodell 12 kleiner ist als das lokale Abweichungsmaß I2 des Zustands Z2. Anstelle des aktuellen lokalen Abweichungsmaßes 12 des Zustands Z2 wird zur Berechnung des neuen Hilfsabweichungsmaßes H2' für diesen Zustand Z2 der Wert des aktuellen lokalen Abweichungsmaßes 15 des Zustands Z5 verwendet. Das heißt, daß anstelle des aktuellen lokalen Abweichungsmaßes I2=2 ein Abweichungsmaß I2'=1 verwendet wird. Für das Hilfsabweichungsmaß H2', das nun zur Bearbeitung des Vergleichsvektors n+1 verwendet wird, ergibt sich dann H2'=11. Beim Berechnen des Hilfsabweichungsmaßes H3 für den Zustand Z3 wird festgestellt, daß der numerische Wert "6" des aktuellen lokalen Abweichungsmaßes 13 für diesen Zustand Z3 einen kleineren Wert hat, als das aktuelle lokale Abweichungsmaß I6 für den ähnlichen Zustand Z6 im anderen Wortmodell 12. Somit muß die oben erläuterte Berechnung nicht modifiziert werden, so daß der neue Hilfsabweichungswert H3=21 unverändert bleibt.

Ebenso wird beim Vergleich des aktuellen lokalen Abweichungsmaßes 15 für den Zustand Z5 festgestellt, daß dessen numerischer Wert "1" kleiner ist als der numerische Wert "2" des aktuellen lokalen Abweichungsmaßes 12 für den ähnlichen Zustand Z2 im Wortmodell 10. Somit erhält das neue Hilfsabweichungsmaß H5 für den Zustand Z5 wie bisher den numerischen Wert "21". Beim Berechnen des neuen Hilfsabweichungsmaßes H6 für den Zustand Z6 wird das lokale Abweichungsmaß I6=7 dieses Zustands dem lokalen Abweichungsmaß I3=6 des ähnlichen Zustands Z3 verglichen. Beim Vergleich wird festgestellt, daß das lokale Abweichungsmaß I3 des Zustands Z3 einen kleineren Wert, nämlich den Wert "6" hat. Bei der Berechnung eines vom neuen Hilfsabweichungsmaß H6 abweichenden neuen Hilfsabweichungsmaßes H6' für den Zustand Z6 und die Bearbeitung des Vergleichsvektors n+1 wird demzufolge zum Wert "26" des alten Hilfsabweichungsmaßes H5 der numerische Wert "6" des übernommenen aktuellen lokalen Abweichungsmaßes I3 addiert, so daß das Hilfsabweichungsmaß H6' den numerischen Wert "32" erhält.

Als Verallgemeinerung gilt, daß vor der Berechnung des neuen Hilfsabweichungswertes, z.B. H2, eines Zustands Z2, zu dem es in anderen Wortmodellen 12 ähnliche Zustände Z5 gibt, alle aktuellen lokalen Abweichungsmaße I2, I5 zu diesen Zuständen Z2, Z5 berechnet werden. Anschließend wird aus diesen Abweichungsmaßen I2, I5 das Abweichungsmaß I5 mit dem kleinsten Wert ermittelt. Der so ermittelte kleinste Wert wird dann bei der Berechnung der neuen Hilfsabweichungswerte H2, H5 in sämtlichen ähnlichen Zuständen Z2, Z5 verwendet.

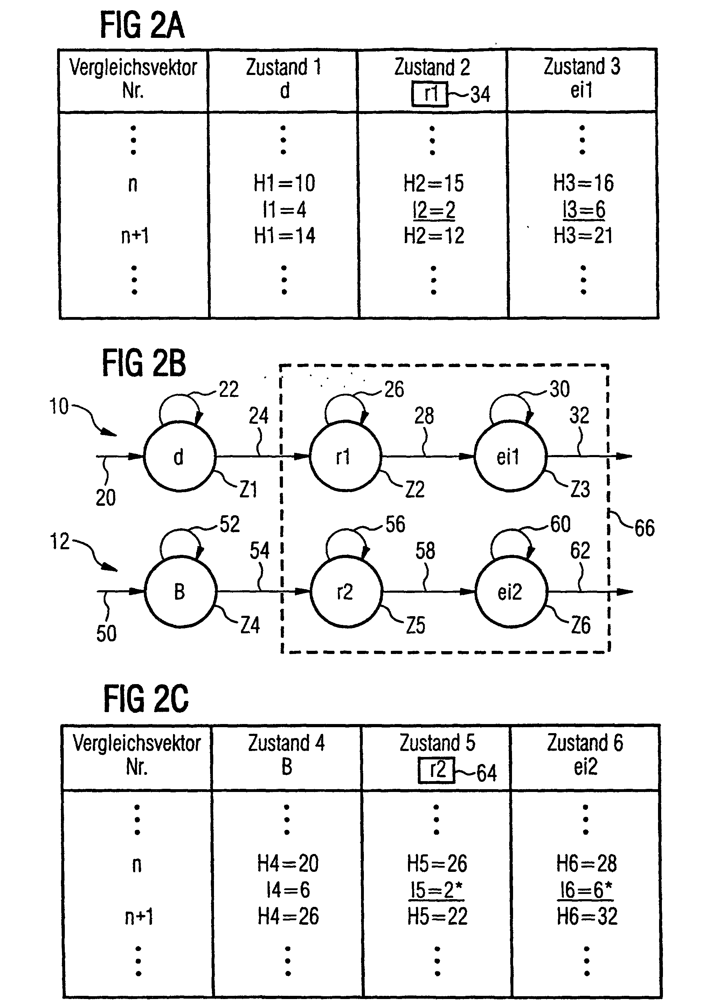

Figur 2 zeigt in Teilen a bis c eine weitere Art der Berücksichtigung ähnlicher Wortbestandteile in den mit den Wortmodellen 10 und 12 modellierten Referenzworten. Dabei werden innerhalb der ähnlichen Wortmodellteile der Wortmodelle 10 und 12, vgl. Strichlinie 66, nur die lokalen Abweichungsmaße I2 und I3 für die Zustände Z2 und Z3 berechnet, so daß die lokalen Abweichungsmaße I5 und I6 für die Zustände Z5 und Z6 nicht berechnet werden müssen. Die Ermittlung der neuen Hilfsabweichungswerte H2 und H3 für das Wortmodell 10 ist in einer Tabelle im Teil a der Figur 2 angegeben, die im wesentlichen mit der Tabelle in Teil a der Figur 1 übereinstimmt.

Die Werte für die neuen Hilfsabweichungsmaße H1 bis H3 werden wie beim bekannten Verfahren ermittelt, ohne die lokalen Abweichungsmaße I5 bzw. I6 des Wortmodells 12 zu berücksichtigen.

Der Aufbau einer Tabelle im Teil c der Figur 2 entspricht im wesentlichen dem Aufbau der Tabelle in Teil c der in Figur 1. Aufgrund der Berücksichtigung des Wortmodells 10 bei der Berechnung der Hilfsabweichungswerte H5 und H6 im Wortmodell 12 ergeben sich jedoch Abweichungen in den numerischen Werten. Es sei angenommen, daß für den Vergleichsvektor n die gleichen alten Hilfsabweichungswerte H4 bis H6 gelten, die auch in der unteren Tabelle der Figur 1 angegeben sind, d.h. H4=20, H5=26 und H6=28. Das lokale Abweichungsmaß I4 für den Zustand Z4 wird bei der Bearbeitung des Vergleichsvektors n wiederum zu I4=6 berechnet, so daß auch der numerische Wert des nachfolgend berechneten neuen Hilfsabweichungsmaßes H4 für den Zustand Z4 unverändert bleibt.

Bei der Berechnung des neuen Hilfsabweichungsmaßes H5 für den Zustand Z5 wird das für den zum Zustand Z5 ähnlichen Zustand Z2 berechnete aktuelle lokale Abweichungsmaß I2=2 verwendet, d.h. es erfolgt eine Übernahme des Wertes "2", verdeutlicht durch einen hochgestellten Stern. Durch Addition des numerischen Wertes "2" zum kleineren Wert "20" der beiden vorhergehenden Hilfsabweichungsmaße H4=20 und H5=26 ergibt sich ein neues Hilfsabweichungsmaß H5 für den Zustand Z5 mit dem Wert "22". Dieser Wert unterscheidet sich vom in der unteren Tabelle der Figur 1 berechneten Wert. Der nachteilige Effekt, daß der Vergleichsvektor n bei der Aussprache des Wortbestandteils "r" im Wort "drei" besser zum Referenzvektor r2 für das Referenzwort "Brei" als zum Referenzvektor r1 für das Referenzwort "drei" paßt, wird unterdrückt.

Die Berechnung des neuen Hilfsabweichungsmaßes H6 für den Zustand Z6 erfolgt ähnlich wie die des Hilfsabweichungsmaßes H5 für den Zustand Z5. Durch einfache Übernahme des aktuellen lokalen Abweichungsmaßes 13 aus dem zum Zustand Z6 ähnlichen Zustand Z3 des Wortmodells 10, kann die Berechnung eines lokalen Abweichungsmaßes 16 für den Zustand Z6 unterbleiben. Die Übernahme ist wiederum durch einen hochgestellten Stern angedeutet. Als neues Hilfsabweichungsmaß H6 für den Zustand Z6 ergibt sich H6=32.

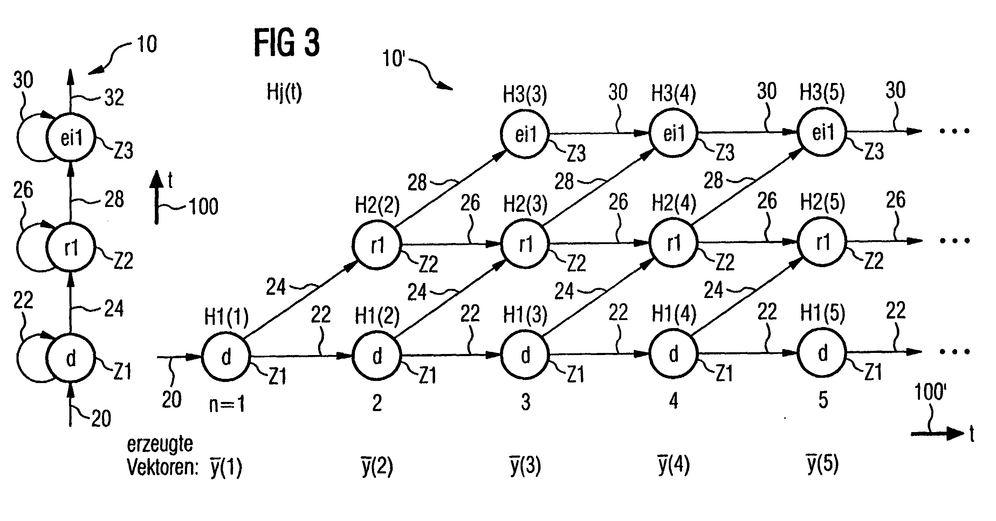

Figur 3 zeigt ein sogenanntes Trellis-Diagramm für das Wortmodell 10 des Wortes "drei". Im linken Teil der Figur 3 ist das Wortmodell 10 nochmals dargestellt. Ein Zeitpfeil 100 verdeutlicht die zeitliche Aufeinanderfolge der Zustände Z1 bis Z3. Innerhalb eines Zustands Z1 bis Z3 kann außerdem beliebig oft ein Selbstübergang stattfinden, vgl. Übergangspfeile 22, 26 und 30. Eine andere Darstellung des Wortmodells 10 läßt sich durch "Abwickeln" des Wortmodells 10 auf einem horizontalen Zeitstrahl erreichen, angedeutet durch einen Zeitpfeil 100'. Ein so entstehendes Wortmodell 10' für das Referenzwort "drei" ist als sogenanntes Trellis-Diagramm dargestellt. Das Trellis-Diagramm hat den Vorteil, daß alle Zustandsabfolgen der Zustände Z1 bis Z3 dargestellt werden. In Figur 3 sind die Hilfsabweichungsmaße H1 bis H3 für Zeitpunkte n=1,...,N eingetragen, dabei ist der jeweilige Zeitpunkt den Hilfsabweichungsmaßen H1 bis H3 in Klammern nachgestellt. Zu jedem Zeitpunkt n=1 bis n=5 sind Vergleichsvektoren $\bar{y}(1)$ bis $\bar{y}(5)$ dargestellt, die aus dem zu verarbeitenden Sprachsignal nach jeweils 10 ms erzeugt worden sind. Der an Hand der Figur 1 erläuterte Viterbi-Algorithmus läßt sich verallgemeinern, wenn Emissionswahrscheinlichkeiten $p(\bar{y}(n)|j)$ verwendet werden, welche die Wahrscheinlichkeit angeben, daß der Vergleichsvektor $\bar{y}(j)$ im Zustand j erzeugt wird. Die Erzeugungswahrscheinlichkeit P für die Folge von Vergleichsvektoren $\bar{y}(1)$ bis $\bar{y}(N)$ kann bei gleichen Übergangswahrscheinlichkeiten zwischen den Zuständen Z1 bis Z3 und beim Verwenden von Normalverteilungen für die auftretenden Wahrscheinlichkeitsfunktionen wie folgt definiert werden:

$$P\big(\bar{y}(1),...,\bar{y}(n),...,\bar{y}(N)\big) = \max \prod_{n=1}^{N} p\big(\bar{y}(n)|j\big) \qquad (1)$$

worin $P(\bar{y}(1),...,\bar{y}(n),...,\bar{y}(N))$ die gesamte Erzeugungswahrscheinlichkeit für die Vergleichsvektorfolge $\bar{y}(1)$ bis $\bar{y}(N)$ ist. Der Operator "max" bedeutet in der Formel (1), daß der Pfad im Trellis-Diagramm des Wortmodells 10' durchlaufen wird, bei dem das Produkt der Erzeugungswahrscheinlichkeiten $p(\bar{y}(n)|j)$ für die nacheinander durchlaufenen Zustände j ein Maximum annimmt.

Die Erzeugungswahrscheinlichkeit $P(\bar{y}(1),...,\bar{y}(N))$ ist dem Wortabweichungsmaß W10 umgekehrt proportional. Nachteilig an dem Ansatz gemäß Formel (1) ist, daß Wortbestandteile, deren Aussprache länger dauert, das berechnete Abweichungsmaß W10 stärker beeinflussen als Wortbestandteile, die innerhalb einer kurzen Zeit ausgesprochen werden. Die Dauer des Aussprechens eines Wortbestandteils ist jedoch für die Unterscheidung nur bedingt relevant. In einem Ausführungsbeispiel des Verfahrens gemäß der Erfindung mit Berücksichtigung der Sprechdauer von Wortbestandteilen wird anstelle des Ansatzes in Formel (1) der folgende Ansatz gewählt:

$$P\big(\bar{y}(1),...,\bar{y}(N)\big) = \max \prod_{n=1}^{N} \frac{p(\bar{y}(n) \mid j)}{D(j)} \qquad (2),$$

worin D(j) die mittlere Sprechdauer des Wortbestandteils ist, der durch den Zustand j modelliert wird. Das Ermitteln der mittleren Sprechdauer D(j) erfolgt über viele Äußerungen von verschiedenen Sprechern, z.B. von 500 Sprechern. Die mittlere Sprechdauer ist ein Maß für den Anteil der Sprechdauer des durch den betreffenden Zustand j modellierten Wortbestandteils an der Gesamtsprechdauer des gesprochenen Wortes. Die mittlere Sprechdauer D(j) kann auch als mittlere Verweildauer im Zustand j bezeichnet werden. Dies ist mit Hilfe der Figur 3 dadurch zu erklären, daß für die Zustandsfolge, welche die Formel (1) maximiert, in jedem Zustand eine bestimmte Zahl von Zeitschritten n verweilt wird.

Im Ausführungsbeispiel werden wie bereits erwähnt, für die Emissionswahrscheinlichkeiten $p(\bar{y}(n)|j)$ Normalverteilungen verwendet. Es gilt die Formel:

$$p\left(\bar{y}(n)\big|j\right) = e^{-\frac{1}{2}\left(\bar{y}(n)-\bar{x}(j)\right)^2} \qquad (3),$$

worin $\bar{x}(j)$ der Referenzvektor für den Zustand j ist. Aufgrund der e-Funktion in der Formel (3) wird mit logarithmierten Erzeugungswahrscheinlichkeiten $P(\bar{y}(1),...,\bar{y}(N))$ gerechnet. Es gilt folgende Beziehung:

$$\mathtt{W10} = -\log\left(P(\bar{y}(1),...,\bar{y}(N)\right) \qquad (4),$$

worin W10 die Wortabweichung und "log" der natürliche Logarithmus sind. Das Minuszeichen in der Formel (4) führt dazu, daß aus der Maximierung eine Minimierung wird, so daß sich Rechenvorteile ergeben.

Durch Einsetzen der Formel (2) in die Formel (4) ergibt sich:

$$W10 = \min \sum_{n=1}^{N} -\log \frac{p(\bar{y}(n)|j)}{D(j)} \qquad (5).$$

Weiterhin folgt durch Einsetzen der Formel (3) in die Formel (5):

$$W10 = \min \sum_{n=1}^{N} \left( (\frac{1}{2}(\bar{y}(n) - \bar{x}(j))^2 + \log(D(j))\right) \qquad (6),$$

bzw.:

$$W10 = \min \sum_{n=1}^{N} \left( \frac{1}{2}\bar{y}(n)^2 + \frac{1}{2}\bar{x}(j)^2 - \bar{x}(j)\cdot\bar{y}(n) + \log(D(j))\right) \qquad (7).$$

Die Berechnung der Formel (7) läßt sich vereinfachen, weil gilt:

$$\frac{1}{2}\bar{x}(j)^2 = CONST\_1(j) \qquad (8).$$

Die Konstanten CONST_1(j) für die Zustände j=1, 2, 3 werden im voraus aus den zum jeweiligen Zustand gehörenden Referenzvektor $\bar{x}(j)$ berechnet und bleiben während der Durchführung des gesamten Verfahrens unverändert.

Es gilt weiterhin:

$$\log(D(j)) = CONST\_2(j) \qquad (9).$$

Die Konstanten CONST_2(j) werden ebenfalls im voraus für die Zustände j ermittelt, nachdem die mittlere Sprechdauer D(j) für den jeweiligen Zustand ermittelt worden ist.

Durch Addition der jeweiligen Konstanten j gemäß der Formel:

$$CONST\_1(j) + CONST\_2(j) = CONST\_3(j) \qquad\qquad (10)$$

ergeben sich Konstanten CONST_3(j) für die jeweiligen Zustände j. Durch Verwenden der Formeln (8) bis (10) folgt aus der Formel (7) die folgende Formel:

$$W10 = \min \sum_{n=1}^{N} \left( \frac{1}{2} \bar{y}(n)^2 - \bar{x}(j) \cdot \bar{y}(n) + CONST\_3(j) \right) \qquad\qquad (11).$$

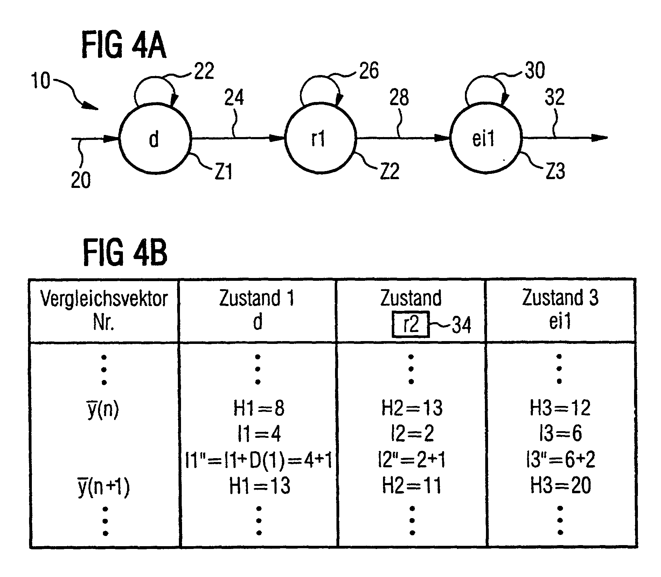

Figur 4 zeigt in einem Teil b die Berechnung von Hilfsabweichungsmaßen H1 bis H3 für das in Teil a gezeigte Wortmodell 10 des Referenzwortes "drei" unter Berücksichtigung von mittleren Sprechdauern D(j). Das Wortähnlichkeitsmaß W10 wird gemäß Formel (11) mit dem bereits an Hand der Figuren 1 und 2 erläuterten vereinfachten Viterbi-Algorithmus berechnet.

Unterhalb des Wortmodells 10 ist in Figur 4 eine Tabelle gezeigt, in deren linke Spalte die aktuell bearbeiteten Vergleichsvektoren $\bar{y}(n), \bar{y}(n+1)$ eingetragen sind. Die zweite Spalte der Tabelle bezieht sich auf den Zustand Z1 mit dem Referenzvektor d. Die dritte Spalte betrifft Werte, die für den Zustand Z2, d.h. mit Hilfe des Referenzvektors r1, berechnet werden. Die rechte Spalte der Tabelle enthält Werte für den Zustand Z3, d.h. den Referenzvektor ei1.

Beim Bearbeiten des Vergleichsvektors $\bar{y}(n)$ werden die in der Zeile dieses Vergleichsvektors dargestellten alten Hilfsabweichungsmaße H1=8, H2=13 und H3=12 verwendet. Es sei wiederum angenommen, daß der Vergleichsvektor $\bar{y}(n)$ aus einem Sprachsignalabschnitt erzeugt worden ist, der bei der Aussprache des Wortbestandteils "r" im Wort "drei" entstanden ist, vgl. Hervorhebung 34.

Aus dem Vergleichsvektor $\bar{y}(n)$ und dem Referenzvektor d wird ein aktuelles lokales Abweichungsmaß I1=4 in Übereinstimmung mit Formel (11) berechnet, indem die Summe aus den ersten beiden Thermen in dem Klammerausdruck der Formel (11) gebildet wird und anschließend noch die Konstante CONST_1(1) addiert wird. Ein modifiziertes aktuelles lokales Abweichungsmaß I1'', welches auch die mittlere Sprechdauer D(1) berücksichtigt, hat den numerischen Wert "5", da für den Zustand Z1 gelten soll: D(1)=1.

Auf gleiche Art wird aus dem Vergleichsvektor $\bar{y}(n)$ und dem Referenzvektor r1 ein aktuelles lokales Abweichungsmaß I2=2 ermittelt. Anschließend wird mit der mittleren Sprechdauer D(2)=1 für den Zustand Z2 das modifizierte Abweichungsmaß I2''=3 ermittelt. Ein aktuelles lokales Abweichungsmaß I3 für den Zustand Z3 hat den numerischen Wert "6". Die mittlere Sprechdauer für den Wortbestandteil "ei" im Referenzwort "drei" ist länger als die mittlere Sprechdauer für die Wortbestandteile "d" bzw. "r". Im Ausführungsbeispiel gilt deshalb D(3)=2. Damit ergibt sich ein modifiziertes Abweichungsmaß I3''=8.

Die neuen Hilfsabweichungsmaße H1 bis H3 für die Bearbeitung des nächsten Vergleichsvektors $\bar{y}(n+1)$ werden unter Berücksichtigung des Wortmodells 10 ermittelt. Als vorhergehender Zustand für den Zustand Z1 kommt bei der Aussprache des Wortbestandteils "r" nur der Zustand Z1 selbst in Frage. Deshalb wird das modifizierte Abweichungsmaß I1' zum alten Hilfsabweichungsmaß H1 addiert, um das neue Hilfsabweichungsmaß H1=13 zu erhalten.

Der Zustand Z2 kann ausgehend vom Zustand Z1 über den Übergangspfeil 24 oder ausgehend vom Zustand Z2 über den Übergangspfeil 26 erreicht werden. Um die Minimierung gemäß der Formel (11) durchzuführen, wird für die Berechnung des neuen Hilfsabweichungsmaßes H2 das alte Hilfsabweichungsmaß H1=8 verwendet, da es einen kleineren numerischen Wert als das alte Hilfsabweichungsmaß H2=13 des Zustands Z2 hat. Für das neue Hilfsabweichungsmaß H2 ergibt sich durch Addition des alten Hilfsabweichungsmaßes H1=8 und des modifizierten aktuellen lokalen Abweichungsmaßes I2' der numerische Wert "11".

Auf ähnliche Art ergibt sich für den Zustand Z3 aus dem Wortmodell 10, daß als vorhergehende Zustände nur der Zustand Z2 oder der Zustand Z3 selbst in Frage kommen. Der Vergleich des alten Hilfsabweichungsmaßes H2=13 des Zustands Z2 und des alten Hilfsabweichungsmaßes H3=12 des Zustands Z3 ergibt, daß das alte Hilfsabweichungsmaß H3 kleiner ist. Deshalb wird zu diesem Hilfsabweichungsmaß H3=12 das modifizierte aktuelle lokale Abweichungsmaß I3'=8 addiert, so daß sich für das neue Hilfsabweichungsmaß H3 der numerische Wert "20" ergibt.

Auf analoge Weise wurden bereits die vor dem Vergleichsvektor $\bar{y}(n)$ liegenden Vergleichsvektoren bearbeitet. Auch alle nach dem Vergleichsvektor $\bar{y}(n)$ folgenden Vergleichsvektoren werden nach dem an Hand der Figur 4 erläuterten Rechenschema bearbeitet. Das Hilfsabweichungsmaß H3 für den letzten Vergleichsvektor ist dann das Wortabweichungsmaß W10, das die Abweichung des gesprochenen Wortes vom mit dem Wortmodell 10 modellierten Referenzwort "drei" angibt.

**EP 0 902 417 B1**

**Patentansprüche**

1.  Verfahren zur Verarbeitung eines Sprachsignals,
    bei dem für mindestens zwei Referenzworte mit einem oder mehreren ähnlichen Wortbestandteilen ein erstes Wortmodell (10) und ein zweites Wortmodell (12) mit aufeinanderfolgenden Zuständen (Z1 bis Z3, Z4 bis 6) für die Wortbestandteile festgelegt werden, vorzugsweise sogenannte "Hidden-Markov"-Modelle,
    wobei zu jedem Zustand (Z1 bis Z6) mindestens ein Referenzvektor (d, r1, ei1; B, r2, ei2) gehört, dessen Komponenten die Ausprägung von Merkmalen in einem zum jeweiligen Zustand (Z1 bis Z6) gehörenden Referenzsignal angeben,
    und wobei im ersten Wortmodell (10) ein erster Zustand (Z2) für den ähnlichen Wortbestandteil im ersten Referenzwort und im zweiten Wortmodell (12) ein zweiter Zustand (Z5) für den ähnlichen Wortbestandteil im zweiten Referenzwort festgelegt sind,
    ein beim Sprechen eines Wortes erzeugtes Sprachsignal in aufeinanderfolgende Signalabschnitte unterteilt wird,
    für die Vergleichsvektoren (n, n+1) erzeugt werden, deren Komponenten die Ausprägung der Merkmale im jeweiligen Signalabschnitt angeben,
    die Vergleichsvektoren (n, n+1) in der zeitlichen Reihenfolge ihrer Signalabschnitte nacheinander bearbeitet werden,
    wobei für vorbestimmte Zustände (Z1 bis Z6) aus dem zugehörigen Referenzvektor (d, r1, ei1; B, r2, ei2) und aus dem aktuellen Vergleichsvektor (n) jeweils ein aktuelles lokales Abweichungsmaß (I1 bis I6) berechnet wird, dessen Wert mit zunehmender Abweichung des Vergleichsvektors (n) vom Referenzvektor (d, r1, ei1; B, r2, ei2) zunimmt,
    und wobei für jeden Zustand (Z1 bis Z6) ein aktuelles Hilfsabweichungsmaß (H1 bis H6) berechnet wird, das den Unterschied eines zum bisher bearbeiten Teil des Sprachsignals gehörenden Teilwortes und eines Referenzteilwortes angibt, welches durch die im Wortmodell (10, 12) bis zum jeweiligen Zustand (Z1 bis Z6) auftretenden Zustände (Z1 bis Z6) modelliert wird,
    das zuletzt berechnete Hilfsabweichungsmaß (H3, H6) des letzten Zustands (Z3, Z6) eines Wortmodells (10, 12) als Wortabweichungsmaß (W10, W12) die Abweichung des gesprochenen Wortes vom durch das jeweilige Wortmodell (10, 12) modellierten Referenzwort angibt,
    und bei dem nach dem vollständigen Bearbeiten des Sprachsignals das Referenzwort mit dem kleinsten Wortabweichungsmaß (W10, W12) als das gesprochene Wort gemeldet wird,
    **dadurch gekennzeichnet, daß** bei der Bearbeitung mindestens eines ausgewählten Vergleichsvektors (n) vor der Berechnung des aktuellen Hilfsabweichungsmaßes (H2) für den ersten Zustand (Z2) das aktuelle lokale Abweichungsmaß (I2, I5) für den ersten und den zweiten Zustand (Z2, Z5) berechnet wird,
    und daß aus dem aktuellen lokalen Abweichungsmaß (I2) für den ersten Zustand (Z2) und aus dem aktuellen lokalen Abweichungsmaß (I5) für den zweiten Zustand (Z5) das Abweichungsmaß (I2, I5) mit dem kleineren Wert ausgewählt wird.

2.  Verfahren nach einem der vorhergehenden Ansprüche, **dadurch gekennzeichnet, daß** bei der Bearbeitung des ausgewählten Vergleichsvektors (n) zum Berechnen des aktuellen Hilfsabweichungsmaßes (H5) des zweiten Zustands (Z5) das aktuelle lokale Abweichungsmaß (I2) des ersten Zustands (Z2) berücksichtigt wird.

3.  Verfahren nach Anspruch 2, **dadurch gekennzeichnet, daß** zur Berechnung des Hilfsabweichungsmaßes (H2) des ersten Zustands (Z2) und zur Berechnung des Hilfsabweichungsmaßes (H5) des zweiten Zustands (Z5) der Wert desselben lokalen Abweichungsmaßes (I2 bzw. I5) verwendet wird.

4.  Verfahren nach Anspruch 1, **dadurch gekennzeichnet, daß** bei der Bearbeitung des aktuellen Vergleichsvektors (n) zum Berechnen des Hilfsabweichungsmaßes (H5) des zweiten Zustands (Z5) anstelle des aktuellen lokalen Abweichungsmaßes (I5) dieses Zustands (Z5) das aktuelle lokale Abweichungsmaß (I2) des ersten Zustands verwendet wird.

5.  Verfahren nach Anspruch 4, **dadurch gekennzeichnet, daß** das aktuelle lokale Abweichungsmaß (I5) für den zweiten Zustand (Z5) nicht berechnet wird.

6.  Verfahren nach einem der vorhergehenden Ansprüche, **dadurch gekennzeichnet, daß** mehrere ähnliche Wortbestandteile in den beiden Referenzworten durch mehrere aufeinanderfolgende Zustände (Z2, Z3; Z5, Z6) in den zugehörigen Wortmodellen (10, 12) modelliert werden.

7.  Verfahren nach einem der vorhergehenden Ansprüche, **dadurch gekennzeichnet, daß** der ähnliche Wortbestandteil innerhalb der Referenzworte die gleiche Position bezüglich des Wortanfangs hat.

8. Verfahren nach einem der vorhergehenden Ansprüche, **dadurch gekennzeichnet, daß** alle Vergleichsvektoren (n, n+1) ausgewählt werden.

9. Verfahren nach einem der vorhergehenden Ansprüche, **dadurch gekennzeichnet, daß** es in einer Telekommunikationsanlage verwendet wird.

10. Sprachverarbeitungseinheit, insbesondere zum Durchführen des Verfahrens nach einem der vorhergehenden Ansprüche,
    mit einer Eingabeeinheit zum Erzeugen eines Sprachsignals aus einem gesprochenen Wort oder zum Eingeben eines Sprachsignals, das beim Sprechen eines Worts erzeugt worden ist,
    und mit einer Bearbeitungseinheit, die für mindestens zwei Referenzworte mit einem oder mehreren ähnlichen Wortbestandteilen ein erstes Wortmodell (10) und ein zweites Wortmodell (12) mit aufeinanderfolgenden Zuständen (Z1 bis Z3, Z4 bis Z6) enthält, die Ähnlichkeit des Sprachsignals zu den Wortmodellen (10, 12) bestimmt und die das ähnlichste Wortmodell (10, 12) meldet,
    **dadurch gekennzeichnet, daß** die Bearbeitungseinheit derart angeordnet ist, daß beim Ermitteln der Ähnlichkeit des Sprachsignals zum ersten Wortmodell (10) ein erstes lokales, die Ähnlichkeit des Sprachsignals zu einem Bestandteil im ersten Wortmodell (10) angebendes Abweichungsmaß (12) und ein zweites lokales, die Ähnlichkeit des Sprachsignals zu einem Bestandteil im zweiten Wortmodell (12) angebendes Abweichungsmaß (I5) berechnet wird,
    und daß aus dem ersten lokalen Abweichungsmaß (I2) und aus dem zweiten lokalen Abweichungsmaß (I5) das lokale Abweichungsmaß mit dem kleineren Wert ausgewählt wird.

**Claims**

1. Method for processing a speech signal, in which, for at least two reference words with one or more similar word components, a first word model (10) and a second word model (12) with successive states (Z1 to Z3, Z4 to 6) for the word components are specified, these being preferably what are referred to as "hidden Markov" models, in which at least one reference vector (d, r1, ei1; B, r2, ei2) is associated which each state (Z1 to Z6) and its components specify the expression of features in a reference signal which is associated with the respective state (Z1 to Z6),
   and in which, in the first word model (10), a first state (Z2) is specified for the similar word component in the first reference word, and in the second word model (12) a second state (Z5) is specified for the similar word component in the second reference word,
   a speech signal which is generated when a word is spoken is divided into successive signal sections for which comparison vectors (n, n+1) whose components specify the expression of the features in the respective signal section are generated,
   the comparison vectors (n, n+1) are processed in succession in the chronological order of their signal sections,
   in each case a current local degree of deviation (I1 to I6) is calculated for predetermined states (Z1 to Z6) from the associated reference vector (d, r1, ei1; B, r2, ei2) and from the current comparison vector (n), the value of which degree of deviation (I1 to I6) increases as a deviation of the comparison vector (n) from the reference vector (d, r1, ei1, B, r2, ei2) increases,
   and in which a current auxiliary degree of deviation (H1 to H6) is calculated for each state (Z1 to Z6), said auxiliary degree of deviation (H1 to H6) specifying the difference between a component word associated with the previously processed part of the speech signal, and a reference component word which is modelled by the states (Z1 to Z6) occurring in the word model (10, 12) up to the respective state (Z1 to Z6),
   that auxiliary degree of deviation (H3, H6) of the last state (Z3, Z6) of a word model (10, 12) which is calculated last specified, as a degree of word deviation (W10, W12), the deviation between the spoken word and the reference word which is modelled by the respective word model (10, 12),
   and in which, after the speech signal has been completely processed, the reference word with the smallest degree of word deviation (W10, W12) is registered as the spoken word,
   **characterized in that**, during the processing of at least one selected comparison vector (n) before the current auxiliary degree of deviation (H2) is calculated for the first state (Z2), the current local degree of deviation (12, 15) is calculated for the first and second states (Z2, Z5),
   and **in that** the degree of deviation (12, 15) with the smaller value is selected from the current local degree of deviation (12) for the first state (Z2) and from the current local degree of deviation (15) for the second state (Z5).

**2.** Method according to one of the preceding claims, **characterized in that** the current local degree of deviation (12) of the first state (Z2) is taken into account in the processing of the selected comparison vector (n) in order to calculate the current auxiliary degree of deviation (H5) of the second state (Z5).

**3.** Method according to Claim 2, **characterized in that** the value of the same local degree of deviation (12 or 15) is used for calculating the auxiliary degree of deviation (H2) of the first state (Z2) and for calculating the auxiliary degree of deviation (H5) of the second state (Z5).

**4.** Method according to Claim 1, **characterized in that** the current local degree of deviation (12) of the first state is used for processing the current comparison vector (n), instead of the current local degree of deviation (15) of this state (Z5), in order to calculate the auxiliary degree of deviation (H5) of the second state (Z5).

**5.** Method according to Claim 4, **characterized in that** the current local degree of deviation (15) is not calculated for the second state (Z5).

**6.** Method according to one of the preceding claims, **characterized in that** a plurality of similar word components in the two reference words are modelled by means of a plurality of successive states (Z2, Z3; Z5, Z6) in the associated word models (10, 12).

**7.** Method according to one of the preceding claims, **characterized in that**, within the reference words, the similar word component is in the same position with respect to the start of the word.

**8.** Method according to one of the preceding claims, **characterized in that** all the comparison vectors (n, n+1) are selected.

**9.** Method according to one of the preceding claims, **characterized in that** it is used in a telecommunications system.

**10.** Speech processing unit, in particular for carrying out the method according to one of the preceding claims, having an input unit for generating a speech signal from a spoken word or for inputting a speech signal which has been generated when a word is spoken, and having a processing unit which, for at least two reference words with one or more similar word components, contains a first word model (10) and a second word model (12) with successive states (Z1 to Z3, Z4 to Z6) which determines similarity of the speech signal to the word models (10, 12) and registers the most similar word model (10, 12),
**characterized in that** the processing unit is arranged in such a way that when the similarity of the speech signal to the first word model (10) is determined, a first local degree of deviation (12) which specifies the similarity of the speech signal to a component in the first word model (10) is calculated, and a second local degree of deviation (15) which specifies the similarity of the speech signal to a component in the second word model (12) is calculated, and **in that** the local degree of deviation with the smaller value is selected from the first local degree of deviation (12) and from the second local degree of deviation (15).

**Revendications**

**1.** Procédé de traitement d'un signal de parole,
dans lequel on définit pour au moins deux mots de référence possédant un ou plusieurs éléments de mot similaires, un premier modèle de mot (10) et un deuxième modèle de mot (12) comprenant une suite d'états (Z1 à Z3, Z4 à Z6) pour lesdits éléments de mot, de préférence des modèles dits de Markov cachés,
à chaque état (Z1 à Z6) appartenant au moins un vecteur de référence (d, r1, ei1 ; B, r2, ei2) dont les composantes indiquent la spécificité de caractéristiques dans un signal de référence appartenant à l'état respectif (Z1 à Z6),
et dans le premier modèle de mot (10) étant défini un premier état (Z2) pour l'élément de mot similaire contenu dans le premier mot de référence et dans le deuxième modèle de mot (12) étant défini un deuxième état (Z5) pour l'élément de mot similaire contenu dans le deuxième mot de référence,
on divise un signal de parole, généré en prononçant un mot, en segments de signal successifs, pour lesquels on crée des vecteurs de comparaison (n, n+1) dont les composantes indiquent la spécificité des caractéristiques dans le segment de signal respectif,
on traite successivement les vecteurs de comparaison (n, n+1), dans l'ordre chronologique de leurs segments de signal,

en calculant pour des états prédéterminés (Z1 à Z6), à partir du vecteur de référence associé (d, r1, ei1 ; B, r2, ei2) et à partir du vecteur de comparaison actuel (n), respectivement un écart local actuel (I1 à I6) dont la valeur augmente à mesure qu'augmente l'écart du vecteur de comparaison (n) par rapport au vecteur de référence (d, r1, ei1 ; B, r2, ei2).

et en calculant pour chaque état (Z1 à Z6) un écart auxiliaire actuel (H1 à H6), qui indique la différence entre un mot partiel appartenant à la partie jusqu'alors traitée du signal de parole et un mot partiel de référence, lequel sera modélisé par les états (Z1 à Z6) apparaissant dans le modèle de mot (10, 12) jusqu'à l'état respectif (Z1 à Z6),

l'écart auxiliaire calculé en dernier (H3, H6) du dernier état (Z3, Z6) d'un modèle de mot (10, 12) indique en tant qu'écart de mot (W10, W12) l'écart du mot énoncé par rapport au mot de référence modélisé par le modèle de mot respectif (10, 12),

et dans lequel, après traitement intégral du signal de parole, on signale le mot de référence ayant le plus faible écart de mot (W10, W12) comme le mot prononcé,

**caractérisé en ce que** durant le traitement d'au moins un vecteur de comparaison sélectionné (n) avant le calcul de l'écart auxiliaire actuel (H2) pour le premier état (Z2), on calcule l'écart local actuel (I2, I5) pour le premier et le deuxième état (Z2, Z5),

et **en ce que** parmi l'écart local actuel (I2) pour le premier état (Z2) et l'écart local actuel (I5) pour le deuxième état (Z5), on sélectionne l'écart (I2, I5) présentant la valeur plus faible.

2. Procédé selon l'une des revendications précédentes, **caractérisé en ce que** durant le traitement du vecteur de comparaison sélectionné (n) pour calculer l'écart auxiliaire actuel (H5) du deuxième état (Z5), on tient compte de l'écart local actuel (I2) du premier état (Z2).

3. Procédé selon la revendication 2, **caractérisé en ce que** pour calculer l'écart auxiliaire (H2) du premier état (Z2) et pour calculer l'écart auxiliaire (H5) du deuxième état (Z5), on utilise la valeur du même écart local (I2 resp. I5).

4. Procédé selon la revendication 1, **caractérisé en ce que** durant le traitement du vecteur de comparaison actuel (n) pour calculer l'écart auxiliaire (H5) du deuxième état (Z5), on utilise à la place de l'écart local actuel (I5) de cet état (Z5) l'écart local actuel (I2) du premier état.

5. Procédé selon la revendication 4, **caractérisé en ce qu'**on ne calcule pas l'écart local actuel (I5) pour le deuxième état (Z5).

6. Procédé selon l'une des revendications précédentes, **caractérisé en ce qu'**on modélise plusieurs éléments de mot similaires dans les deux mots de référence par plusieurs états successifs (Z2, Z3 ; Z5, Z6) dans les modèles de mots (10, 12) associés.

7. Procédé selon l'une des revendications précédentes, **caractérisé en ce que** l'élément de mot similaire dans les mots de référence a la même position par rapport au début de mot.

8. Procédé selon l'une des revendications précédentes, **caractérisé en ce qu'**on sélectionne tous les vecteurs de comparaison (n, n+1).

9. Procédé selon l'une des revendications précédentes, **caractérisé en ce qu'**on l'utilise dans une installation de télécommunication.

10. Unité de traitement de la parole, en particulier pour la mise en oeuvre du procédé selon l'une des revendications précédentes,

dotée d'une unité d'entrée pour générer un signal de parole à partir d'un mot énoncé ou pour entrer un signal de parole ayant été généré en prononçant un mot,

et dotée d'une unité de traitement, laquelle contient pour au moins deux mots de référence possédant un ou plusieurs éléments de mot similaires, un premier modèle de mot (10) et un deuxième modèle de mot (12) comprenant une suite d'états (Z1 à Z3, Z4 à Z6), laquelle détermine la similarité du signal de parole avec les modèles de mot (10, 12) et laquelle signale le modèle de mot (10, 12) présentant la plus forte similarité,

**caractérisée en ce que** ladite unité de traitement est agencée de manière à calculer durant la détermination de la similarité du signal de parole avec le premier modèle de mot (10) un premier écart local (I2) indiquant la similarité du signal de parole avec un élément contenu dans le premier modèle de mot (10) et un deuxième écart local (I5) indiquant la similarité du signal de parole avec un élément contenu dans le deuxième modèle de mot (I2),

et **en ce qu'**on sélectionne parmi le premier écart local (I2) et le deuxième écart local (I5) l'écart local présentant la valeur plus faible.

## FIG 1A

| Vergleichsvektor Nr. | Zustand 1 d | Zustand 2 [r1] ~34 | Zustand 3 ei1 |
|---|---|---|---|
| ⋮ | ⋮ | ⋮ | ⋮ |
| n | H1=10 I1=4 | H2=15 I2=2 (I2'=1) | H3=16 I3=6 |
| n+1 | H1=14 | H2=12 (H2'=11) | H3=21 |
| ⋮ | ⋮ | ⋮ | ⋮ |

## FIG 1B

## FIG 1C

| Vergleichsvektor Nr. | Zustand 4 B | Zustand 5 [r2] ~64 | Zustand 6 ei2 |
|---|---|---|---|
| ⋮ | ⋮ | ⋮ | ⋮ |
| n | H4=20 I4=6 | H5=26 I5=1 | H6=28 I6=7 (I6'=6) |
| n+1 | H4=26 | H5=21 | H6=33 (H6'=32) |
| ⋮ | ⋮ | ⋮ | ⋮ |

# FIG 2A

| Vergleichsvektor Nr. | Zustand 1 d | Zustand 2 [r1] ~34 | Zustand 3 ei1 |
|---|---|---|---|
| $\vdots$ | $\vdots$ | $\vdots$ | $\vdots$ |
| n | H1=10 | H2=15 | H3=16 |
| | I1=4 | $\underline{I2=2}$ | $\underline{I3=6}$ |
| n+1 | H1=14 | H2=12 | H3=21 |
| $\vdots$ | $\vdots$ | $\vdots$ | $\vdots$ |

# FIG 2B

# FIG 2C

| Vergleichsvektor Nr. | Zustand 4 B | Zustand 5 [r2] ~64 | Zustand 6 ei2 |
|---|---|---|---|
| $\vdots$ | $\vdots$ | $\vdots$ | $\vdots$ |
| n | H4=20 | H5=26 | H6=28 |
| | I4=6 | $\underline{I5=2*}$ | $\underline{I6=6*}$ |
| n+1 | H4=26 | H5=22 | H6=32 |
| $\vdots$ | $\vdots$ | $\vdots$ | $\vdots$ |

**FIG 3**

erzeugte
Vektoren: $\bar{y}(1)$    $\bar{y}(2)$    $\bar{y}(3)$    $\bar{y}(4)$    $\bar{y}(5)$

EP 0 902 417 B1

## FIG 4A

## FIG 4B

| Vergleichsvektor Nr. | Zustand 1 d | Zustand r2 ~34 | Zustand 3 ei1 |
|---|---|---|---|
| ⋮ | ⋮ | ⋮ | ⋮ |
| $\overline{y}(n)$ | $H1=8$ $I1=4$ $I1''=I1+D(1)=4+1$ | $H2=13$ $I2=2$ $I2''=2+1$ | $H3=12$ $I3=6$ $I3''=6+2$ |
| $\overline{y}(n+1)$ | $H1=13$ | $H2=11$ | $H3=20$ |
| ⋮ | ⋮ | ⋮ | ⋮ |